# EUROPÄISCHE PATENTANMELDUNG

(11) **EP 2 489 831 A2**
(43) Veröffentlichungstag der Anmeldung: **22.08.2012**
(21) Anmeldenummer: 12155492.7
(22) Anmeldetag: 15.02.2012
(51) Int. Cl.: E21D 11/08, F24J 2/04, F28D 1/047, F28D 1/06, F28D 21/00, F28F 21/04, F24J 3/08

(54) **Tübbing mit Wärmekollektor**

(30) Priorität: 15.02.2011 DE 102011011314
(71) Anmelder: Rehau AG & Co, 95111 Rehau (DE)
(72) Erfinder: Winterling, Ralf, 91074 Herzogenaurach (DE); Gottschalk, Daniel, 90449 Nürnberg (DE)

(57) **Zusammenfassung**

Die vorliegende Erfindung bezieht sich auf einen Tübbing (10) mit Wärmekollektor (12), der eine Anordnung von Fluidleitungen (13) umfasst und aus einem Verbundwerkstoff gefertigt ist. Hierdurch kann auf eine Armierung verzichtet werden.
Da ein Wärmekollektor (12) nicht an einem armierungsfreien Tübbing fixiert werden kann, wird erfindungsgemäß vorgeschlagen, dass die Anordnung von Fluidleitungen (13) an einem selbsttragenden Trägermodul (14) befestigt ist und das Trägermodul (14) an die Krümmung des Tübbings (10) angepasst ist.

## Beschreibung

Die vorliegende Erfindung betrifft einen Tübbing mit Wärmekollektor. Desweiteren bezieht sich die Erfindung auch auf ein Verfahren zum Herstellen eines Tübbing mit Wärmekollektor.

Ein Tübbing ist Teil eines Tunnelbauwerks. In der Regel werden Tübbings als Ringsegmente vorgefertigt und zu einem Ring zusammengesetzt und dienen der Verkleidung von einer Tunnelröhre. Ein gattungsgemäßer Tübbing mit Wärmekollektor ist aus der EP-A-1905947 bekannt. Der Wärmekollektor wird als Teil einer Geothermieanlage zum Erschließen von Wärmeenergie aus dem umliegenden Boden oder Fels der Tunnelröhre eingesetzt und umfasst eine Anordnung von Fluidleitungen.

Es ist weiterhin bekannt, diese Wärmeenergie mittels Kunststoffabsorberleitungen zu gewinnen, welche beim Bau des Tunnels mit Ortbeton vorher in die zu erstellende Innenwandung eingelegt werden. Beim konventionellen Tunnelbau wird zunächst eine Tunnelröhre geschaffen und die Fluidleitungen an der Tunnelröhre befestigt und mit einer Betonschalung abgedeckt, die die Tunnelwandung bildet. Beim alternativen maschinellen Tunnelvortrieb wird die Tunnelröhre mit den Tübbings ausgekleidet, die die Anordnung von Fluidleitungen enthalten.

Neuerdings werden Tübbings aus Faserbeton oder ähnlichen Verbundwerkstoffen eingesetzt, die keinerlei Armierung mehr benötigen. Solche Verbundwerkstoffe sind besonders vorteilhaft, da Zug- und Druckfestigkeit der Tunnelwandung erhöht werden kann. Fehlt jedoch die Armierung in dem Tübbing, ist eine Fixierung des Wärmekollektors nicht mehr möglich.

Es ist eine Aufgabe der vorliegenden Erfindung, mit technisch einfachen Mitteln den Tübbing so zu verbessern, dass der Wärmekollektor trotz fehlender Bewehrung mit dem Tübbing verbindbar ist.

Diese Aufgabe wird mit den Merkmalen des Hauptanspruchs gelöst.

Erfindungsgemäß ist es vorgesehen, dass die Anordnung von Fluidleitungen an einem selbsttragenden Trägermodul befestigt ist und das Trägermodul an die Krümmung des Tübbings angepasst ist. Die Erfindung beruht auf vorgefertigten Absorbermodulen mit vorbestimmbarer Verlegeform auf einem geeigneten Träger. Die Verlegeform bildet eine Anordnung von Fluidleitungen, die eine effiziente Wärmeenergieübertragung zwischen Tunnelmaterial und dem Fluid ermöglicht. Vorteilhafterweise wird das Fluid flächig in der Tunnelwandung aus Tübbings umgewälzt, bevorzugt bei geringem Strömungswiderstand. Mittels einer Wärmepumpe oder dergleichen kann die so gewonnene Wärmeenergie umgewandelt, weitergeleitet und /oder gespeichert werden.

Neben Schlangen und Zickzacklinien kann die Anordnung von Fluidleitungen einzügig oder mehrzügig ausgelegt sein. Einzügig bedeutet hierbei, dass das Fluid durch nur eine Leitung vom Zulauf bis zum Ablauf hindurchfließt. Mehrzügig kann sowohl für mehrlagigen als auch für parallelen Fluidfluss stehen.

Das Trägermodul kann aus Kunststoff gefertigt sein und per Hitze oder Klebstoff mit den Fluidleitungen, insbesondere bei Kunststoffrohren, verbunden sein. Dies spart Gewicht und Transportkosten bei massenhafter Vorfertigung. Ebenfalls vorteilhaft kann ein Trägermodul aus Metall sein, das die fehlende Armierung ersetzt und die Stabilität des Tübbings mit Wärmekollektor erhöht. Weiterhin dürfte der Wärmetransport von der Tübbingwandung zur Fluidleitung dadurch verbessert werden. Das selbsttragende Absorbermodul ist so gehalten, dass die Fluidleitungen ihre vorbestimmte Form beibehalten, insbesondere auf einen vordefinierten Radius gekrümmt werden können. Dieser Radius kann der Außenwandung, Innenwandung oder beispielsweise der Wandungsmitte des Tübbings entsprechen. Eine Tragstruktur aus Leichtmetall könnte zudem auf verschiedene Radien anzupassen sein, ohne dabei nicht mehr freitragend zu sein.

Das Trägermodul kann derart vorteilhaft weitergebildet sein, dass mindestens ein Abstandshalter daran angeordnet ist, wodurch die Fluidleitungen entweder innerhalb oder außerhalb der Wandung des Tübbings anzuordnen sind. Besteht die Tunnelröhre zum Beispiel lediglich aus Sanden, Tonen und anderen weichen Materialien, kann ein an der Außenseite des Tübbings angeordneter Wärmekollektor großflächig damit in Kontakt gebracht werden. Ein so gestalteter Tübbing könnte während des Transports und der Lagerung eine Abdeckung über dem Wärmekollektor erhalten, um Beschädigungen zu vermeiden. Der Abstandshalter kann insbesondere derart gestaltet sein, dass der Wärmetransport von der äußeren Tübbingwandung zur Fluidleitung verbessert wird, da nur der Abstandshalter aus Metall oder einem gut wärmeleitenden Werkstoff gefertigt ist. Zwischenräume zwischen Fluidleitungen und Tunnelröhre sind bevorzugt verfüllt, um Luftspalte und somit verringerten Wärmeaustausch zu vermeiden.

Eine besonders kostengünstig vorzufertigende Anordnung von Fluidleitungen ist in Form einer Rohrschlange ausgebildet und die Rohrschlange ist von dem Trägermodul in Seitenansicht als ein Kreissegment vorgeformt. Schon die so geformte Rohrschlange weist aufgrund der kreisförmigen rundumlaufenden Rohrwandung eine gute Formstabilität auf, so dass die selbsttragende Konstruktion des Trägermoduls sehr einfach gehalten werden kann. Beispielsweise kann das Trägermodul eine Matte oder ein Gewebe aus Baustahl sein.

Um bei Kombination der erfindungsgemäßen Tübbings zu einem Tübbingring einen Umlauf des Fluids leicht bewerkstelligen zu können, ist es vorteilhaft, wenn die Rohrschlange mit einem Zulauf und einem Ablauf abschließt, welche vom Trägermodul derart festgelegt sind, dass Zu- und Ablauf in die Wandung des Tübbings hineinragen. Bevorzugt liegen der Zu-und Ablauf jeweils auf einer Seite der Wandung und liegen auf einer Linie. Es kommt zu keinem Versatz zwischen dem Zulauf eines Tübbing und dem Ablauf des benachbarten Tübbings und die Tübbings sind praktischerweise nicht seitenverkehrt zu montieren. Einfache Verbindungstechniken schließen die Fluidleitungen dann zu einem Rohrsystem zusammen.

Wie bereits eingangs erwähnt, kann der Wärmekollektor beim konventionellen Tunnelbau an der Tunnelröhre befestigt werden. Wird der Tunnel jedoch maschinell vorangetrieben, ist die Tunnelröhre nicht zugänglich. Schilde stützen die Tunnelröhre ab, bis eine Stabilisierung mittels Tübbing erstellt ist. Werden nunmehr Tübbings ohne Bewehrung eingesetzt, kann die Fixierung des Wärmekollektors nicht mehr bewerkstelligt werden. Es ist daher eine weitere Aufgabe der vorliegenden Erfindung, mittels technisch einfacher Mittel ein Verfahren anzugeben, mit dem ein solcher Tübbing mit dem Wärmekollektor sicher verbunden werden kann.

Das erfindungsgemäße Verfahren zum Herstellen eines Tübbings mit einem Wärmekollektor, der eine Anordnung von Fluidleitungen umfasst und die vorstehenden Merkmale des Tübbings aufweisen kann, umfasst folgen Verfahrensschritte:
- die Anordnung von Fluidleitungen werden auf einem selbsttragenden Trägermodul befestigt und
- das Trägermodul mit den Fluidleitungen wird an einer Schalung für den Tübbing ausgerichtet und
- der Tübbing wird aus Faserbeton gefertigt.

Durch die freitragende Konstruktion des Wärmekollektors kann auf die Armierung verzichtet werden. Das selbsttragende Trägermodul kann die Stabilität und Formtreue des armierungslosen Tübbings erhöhen. Das Absorbermodul aus dem Trägermodul und dem Wärmekollektor kann standardisiert sein und in Serienproduktion vorgefertigt werden. Diese Absorbermodule eignen sich selbstverständlich auch für eine Montage auf der Tunnelröhre beim konventionellen Tunnelbau, insbesondere bei wenig tragfähigen Tunnelmaterialien, wie Sand, Kalkstein oder dergleichen.

Das Verfahren kann derart weitergebildet sein, dass der Zu- und Ablauf mittels einer in die Schalung eingebrachten Tülle vor flüssigem Beton geschützt wird und eine Ausnehmung um den Zu- und Ablauf an einer Seite des Tübbings bereitgestellt wird. Diese Tüllen verbleiben einfach im Tübbing und decken die Oberfläche der Ausnehmungen ab. Die Ausnehmungen nehmen beispielsweise die Verbindungselemente zum Verbinden der Zuläufe mit den Abläufen des benachbarten Tübbings auf. Vorteilhafter Weise ist an jedem Tübbing entweder der Zu- oder der Ablauf mit einem Verbindungselement vorinstalliert. Dies verkürzt die Montagezeiten weiter.

Durch die in den Tübbingen integrierten Fluidleitungen kann das damit gebaute Tunnelbauwerk thermisch aktiviert werden. Durch das in den Fluidleitungen zirkulierende Fluid kann Wärmeenergie in die Tübbinge, die zu einem Ring zusammengesetzt und die Tunnelröhre auskleiden, eingespeist werden bzw. Wärmeenergie aus diesen abgezogen werden. Im Falle des Entzugs von Wärme kommt diese entweder aus dem umliegenden Boden, was einer geothermischen Nutzung entspricht bzw. aus der Tunnelluft. Dies ist insbesondere von Interesse bei Tunnelbauwerken, welche aufgrund des Tunnelbetriebes (z.B. bei U-Bahn-Tunneln) zu einer Überhitzung neigen. Damit kann über die thermische Aktivierung der Tübbinge die Tunnelluft gekühlt werden, indem Wärmeenergie aus dem Tunnel entzogen wird. Dies stellt eine wirtschaftlich attraktive Alternative zur konventionellen Tunnelkühlung über Lüftungsanlagen dar.

Die Erfindung wird nun anhand von Ausführungsbeispielen mit Bezug auf die beiliegenden Zeichnungen näher beschrieben.

In den Zeichnungen zeigen:
- Fig. 1: eine perspektivische Seitenansicht einer ersten Ausführungsform der Erfindung;
- Fig. 2: eine Draufsicht einer zweiten Ausführungsform des erfindungsgemäßen Tübbing; und
- Fig. 3: ein schematisches Flussdiagramm eines erfindungsgemäßen Verfahrens.

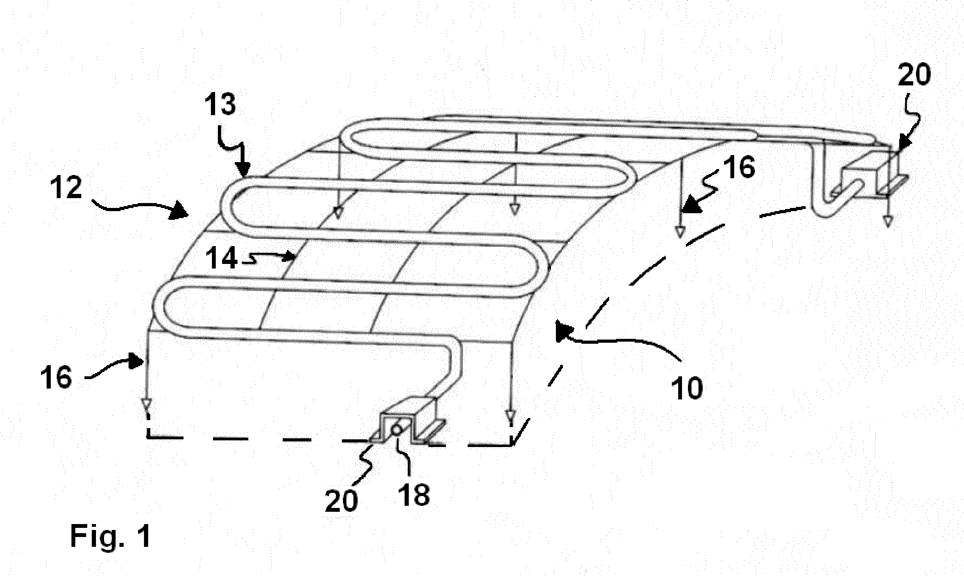

Soweit im Folgenden nichts anderes gesagt ist, bezieht sich die nachfolgende Beschreibung stets auf alle Ausführungsformen der Figuren 1 bis 3, wobei gleiche Bezugszeichen dieselben konstruktiven Merkmale beschreiben.

In Figur 1 ist ein selbsttragendes Trägermodul 14 gezeigt, das eine Anordnung von Fluidleitungen 13 umfasst, die fest miteinander zu einem Wärmekollektor 12 verbunden sind. Ein durch gestrichelte Linien angedeuteter Tübbing 10 ist mit dem Wärmekollektor 12 trotz fehlender Armierung verbunden. Hierzu ist das Trägermodul 14 an die Krümmung des Tübbings 10 angepasst. Das Trägermodul 14 weist voneinander beabstandete Abstandshalter 16 auf, wodurch die Fluidleitungen 13 nahe zur Außenwandung im Inneren des Tübbings 10 anzuordnen sind. Alternativ können sich die Abstandshalter 16 von der Außenwandung des Tübbings zwecks Wärmeleitung bis innerhalb der Wandung des Tübbings 10 erstrecken, wobei die Fluidleitungen 13 optimal von der Tübbingwandung geschützt sind.

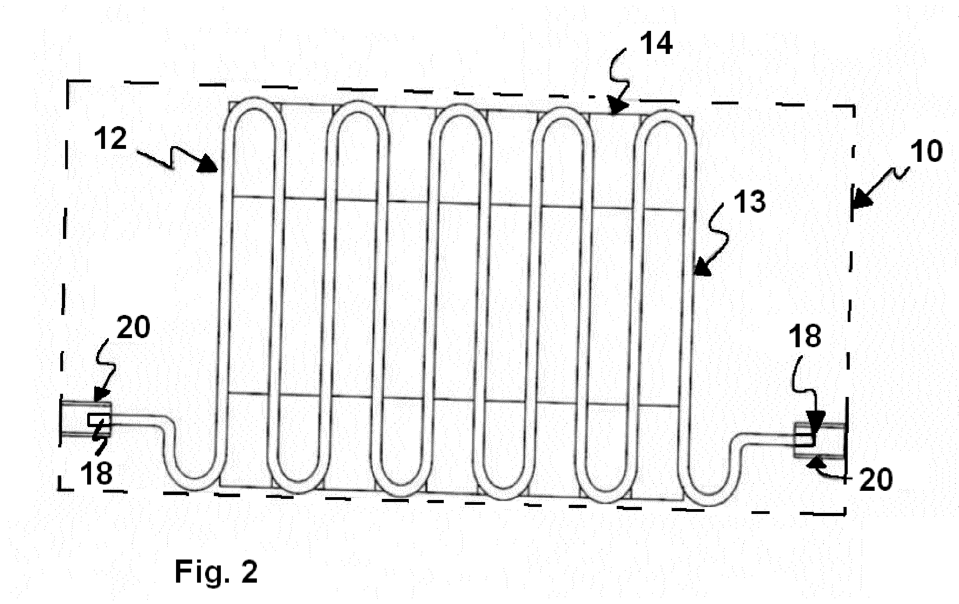

Wie besonders deutlich in der Draufsicht in Figur 2 ersichtlich, sind die Fluidleitungen 13 in Form einer Rohrschlange ausgebildet. Diese von sich aus schon formstabile Rohranordnung ist von dem Trägermodul 14 in Seitenansicht - also in der Papierebene - als ein Kreissegment vorgeformt und so an die Krümmung des mit Strichlinien dargestellten Tübbing 10 angepasst. Die Rohrschlange schließt mit einem Zulauf 18 und einem Ablauf 18 ab, welche vom Trägermodul 14 derart festgelegt sind, dass Zu- und Ablauf 18 in die Wandung des Tübbings 10 hineinragen. So kann eine von Fluidleitungen und Verbindungselementen freibleibende - insbesondere glatte ― Tübbingringinnenseite geschaffen werden.

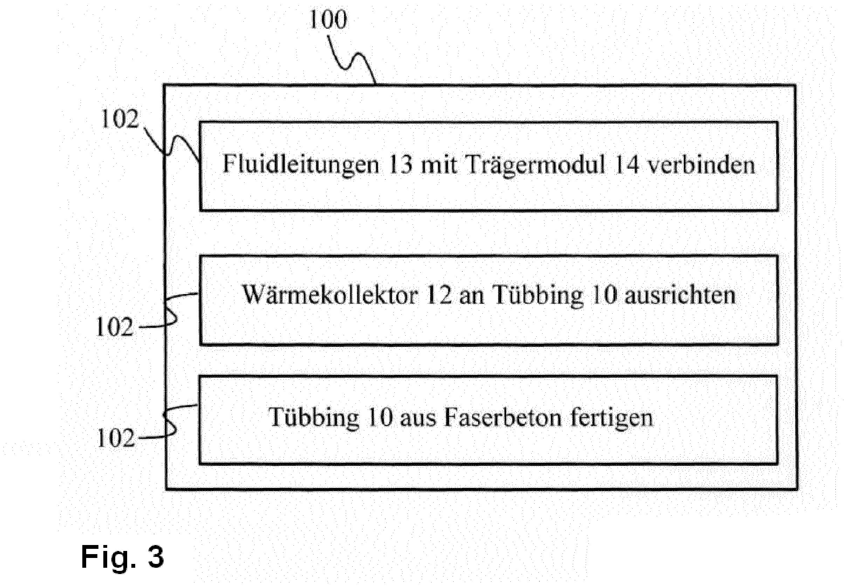

Ein erfindungsgemäßes Verfahren 100 zum Herstellen eines Tübbings 10 mit einem Wärmekollektor 12 ist mit seinen Verfahrensschritten 102 in Figur 3 illustriert. Der Wärmekollektor 12 umfasst eine Anordnung von Fluidleitungen 13, die auf einem selbsttragenden Trägermodul 14 befestigt werden. Das vorgefertigte Trägermodul 14 mit den Fluidleitungen 13 wird an einer Schalung für den Tübbing 10 ausgerichtet, wobei auch die Krümmung des aus Leichtmetall gefertigten Trägermoduls 14 verändert werden kann. Nach dem Anpassen und dem Ausrichten des erfindungsgemäßen Wärmekollektors 12 wird der Tübbing aus Faserbeton gefertigt.

In einem weiteren Verfahrensschritt 102 wird vor dem Fertigen des Tübbing 10 sowohl der Zulauf 18 als auch der Ablauf 18 mittels einer in die Schalung eingebrachten Tülle 20 vor flüssigem Beton geschützt und eine Ausnehmung um den Zu- und Ablauf 18 an einer Seite des Tübbings 10 bereitgestellt.

Es ist für den Fachmann ohne weiteres ersichtlich, dass das erfindungsgemäße Verfahren auch derart ausgeführt werden kann, dass statt des Faserbetons ein anderer geeigneter Verbundwerkstoff für die Schaffung der Tübbingwandung eingesetzt werden kann. Das erfindungsgemäße Konzept eines freitragenden Wärmekollektors kann auch im konventionellen Tunnelbau derart eingesetzt werden, dass der vorgefertigte Wärmekollektor 12 mittels der Abstandshalter 16 an der Tunnelröhre ausgerichtet wird und mit Ortbeton ohne zusätzliche Armierung eine Tunnelwandung erstellt wird.

Patentansprüche

### Bezugszeichenliste

- 10: Tübbing
- 12: Wärmekollektor
- 13: Fluidleitungen
- 14: Trägermodul
- 16: Abstandshalter
- 18: Zu- oder Ablauf
- 20: Tülle
- 100: Verfahren
- 102: Verfahrensschritt

## Patentansprüche

1. Tübbing (10) mit Wärmekollektor (12), der eine Anordnung von Fluidleitungen (13) umfasst, **dadurch gekennzeichnet, dass** die Anordnung von Fluidleitungen (13) an einem selbsttragenden Trägermodul (14) befestigt ist und das Trägermodul (14) an die Krümmung des Tübbings (10) angepasst ist.

2. Tübbing (10) nach Anspruch 1, **dadurch gekennzeichnet, dass** das Trägermodul (14) mit mindestens einem Abstandshalter (16) versehen ist, wodurch die Fluidleitungen (13) entweder innerhalb oder außerhalb der Wandung des Tübbings (10) anzuordnen sind.

3. Tübbing (10) nach Anspruch 1 oder 2, **dadurch gekennzeichnet, dass** die Fluidleitungen (13) in Form einer Rohrschlange ausgebildet sind und die Rohrschlange von dem Trägermodul (14) in Seitenansicht als ein Kreissegment vorgeformt ist.

4. Tübbing nach Anspruch 4, **dadurch gekennzeichnet, dass** die Rohrschlange mit einem Zulauf (18) und einem Ablauf (18) abschließt, welche vom Trägermodul (14) derart festgelegt sind, dass Zu- und Ablauf in die Wandung des Tübbings (10) hineinragen.

5. Verfahren (100) zum Herstellen eines Tübbings (10) nach einem der vorstehenden Ansprüche mit einem Wärmekollektor (12), der eine Anordnung von Fluidleitungen (13) umfasst, die auf einem selbsttragenden Trägermodul (14) befestigt werden und das Trägermodul (14) mit den Fluidleitungen (13) an einer Schalung für den Tübbing (10) ausgerichtet wird und der Tübbing aus Faserbeton gefertigt wird.

6. Verfahren (100) nach Anspruch 5, **dadurch gekennzeichnet, dass** der Zu- und Ablauf (18) mittels einer in die Schalung eingebrachten Tülle (20) vor flüssigem Beton geschützt wird und eine Ausnehmung um den Zu- und Ablauf (18) an einer Seite des Tübbings (10) bereitgestellt wird.
